# EUROPÄISCHE PATENTSCHRIFT

(11) **EP 4 366 576 B1**
(45) Veröffentlichungstag und Bekanntmachung des Hinweises auf die Patenterteilung: **28.05.2025**
(21) Anmeldenummer: 22728956.8
(22) Anmeldetag: 08.06.2022
(51) Int. Cl.: A45C 7/00, B62J 9/24, B62J 9/23

(54) **MOTORRADKOFFER MIT VERSTELLBAREM STAUVOLUMEN**
MOTORCYCLE CASE HAVING AN ADJUSTABLE STORAGE VOLUME
BOÎTIER DE MOTOCYCLETTE AYANT UN VOLUME DE STOCKAGE RÉGLABLE

(30) Priorität: 09.07.2021 DE 102021117825
(43) Veröffentlichungstag der Anmeldung: 15.05.2024
(73) Patentinhaber: Bayerische Motoren Werke Aktiengesellschaft, 80809 München (DE)
(72) Erfinder: XICOLA SERRANO, Jaume, 08100 Mollet del Vallés (ES)
(86) Internationale Anmeldenummer: PCT/EP2022/065543
(87) Internationale Veröffentlichungsnummer: WO 2023/280499

(56) Entgegenhaltungen:
- EP-A2- 1 566 328
- US-A- 4 854 430

## Beschreibung

Die Erfindung betrifft einen Motorradkoffer mit einem verstellbaren Stauvolumen.

Motorradkoffer werden üblicherweise seitlich oder zentral hinter einem Fahrer, der auf einem Motorrad sitzt, angeordnet und befestigt, um dem Fahrer genügend Stauvolumen zum Mitführen von Motorradhelmen oder sonstigen Gegenständen zu bieten. Abhängig von deren vorgesehener Anordnung werden sie auch als Seitenkoffer bzw. Heckkoffer bezeichnet.

Diese Motorradkoffer haben zwei schalenartige Kofferteile, welche bevorzugt Hartschalenkofferteile sind. Die daraus gebildeten Hartschalenkoffer zeichnen sich durch besondere Robustheit aus.

Aus dem Stand der Technik sind Motorradkoffer bekannt, die zwei relativ zueinander verschiebliche, schalenartige, ineinandergesteckte Kofferteile und einen Verschiebemechanismus mit einem Zahnradmechanismus umfassen. Diese robust ausgeführten Kofferteile sind Hartschalenkofferteile, wobei sich durch den Zahnradmechanismus deren Stauvolumen an den individuellen Gebrauch anpassen lässt.

Durch die Anpassung des Stauvolumens an den individuellen Gebrauch, lässt sich die Gesamtbreite eines Motorrads verringern, falls nur ein Teil des Stauvolumens benötigt wird. In weiterer Folge erleichtert dies das Rangieren und Parken des Motorrads, wenn nicht das maximale Stauvolumen benötigt wird.

Zudem spielt der Luftwiderstand bei einem Motorradkoffer eine entscheidende Rolle. Ein Motorradkoffer mit einer kleinen Luftangriffsfläche führt im Vergleich zu einer großen Luftangriffsfläche zu einem geringeren Luftwiderstand und somit zu einem geringeren Kraftstoffverbrauch des Motorrads.

Es hat sich jedoch als nachteilig herausgestellt, dass bei diesen Motorradkoffern kein aerodynamisches Design bei gleichzeitig maximalem Stauvolumen möglich ist, denn die bekannten Motorradkoffer mit Zahnradmechanismus haben an deren dem Fahrtwind zugewandten Seite eine nahezu ebene Wand, wobei für ein aerodynamisches Design eine konvexe Wand gefordert wird.

Die gattungsgemäße EP 1 566 328 A3 betrifft einen Seitenkoffer, der zur seitlichen Befestigung im Hinterradbereich eines Motorrads vorgesehen ist. Der Seitenkoffer weist ein inneres Kofferteil auf, das an dem Motorrad befestigbar ist, und ein mit dem inneren Kofferteil verbundenes äußeres Kofferteil, das seitlich verschieblich in Bezug auf das innere Kofferteil angeordnet bzw. mit dem inneren Kofferteil verbunden ist. Durch Verschieben des äußeren Kofferteils in Bezug auf das innere Kofferteil kann die Breite und somit das Stauraumvolumen des Seitenkoffers verstellt werden.

Die US 4,854,430 betrifft einen erweiterbaren Aktenkoffer.

Ausgehend hiervon ist es die Aufgabe der Erfindung, einen solchen variablen Motorradkoffer mit Zahnradmechanismus weiterzuentwickeln. Dabei soll ein aerodynamisches Design bei einer gleichzeitigen Maximierung des Stauvolumens erreicht werden. Zudem sollen gewisse Bauteile des Zahnradmechanismus sowohl für einen Motorradkoffer der als Seitenkoffer als auch für einen Motorradkoffer der als Heckkoffer konzipiert ist, verwendet werden können.

Diese Aufgabe wird durch einen Motorradkoffer gelöst, mit einem inneren Kofferteil, das an einem Motorrad befestigbar ist, und einem mit dem inneren Kofferteil verbundenen äußeren Kofferteil, das seitlich relativ zum inneren Kofferteil verschieblich ist, und einem die Kofferteile koppelnden, angetriebenen Zahnradmechanismus. Dieser Zahnradmechanismus kann durch Verschieben des äußeren Kofferteils relativ zum inneren Kofferteil die Breite und somit das Stauvolumen des Motorradkoffers verstellen, wobei der Zahnradmechanismus mindestens eine erste und eine zweite Zahnradgruppe umfasst, die jeweils mehrere miteinander gekoppelte, gemeinsam drehende und einer Drehachse zugeordnete Zahnräder aufweisen. Die Zähne von benachbarten Zahnradgruppen kämmen miteinander, wobei die Zahnradgruppen jeweils wenigstens ein Stirnrad und wenigstens ein Kegelrad aufweisen und entweder die Stirnräder oder die Kegelräder benachbarter Zahnradgruppen kämmen.

Der besondere Vorteil dieses Motorradkoffers liegt in der einheitlichen ersten Zahnradgruppe, welche sowohl ein Kegelrad als auch Stirnrad umfasst. Hierdurch lassen sich mit der ersten Zahnradgruppe sowohl parallele als auch gewinkelte Ausführungen der Getriebe realisieren. Während bei einer parallelen Ausführung die Drehachsen sämtlicher Zahnradgruppen parallel zueinander angeordnet sind, ist bei einer gewinkelten Ausführung die Drehachse von zumindest einer Zahnradgruppe nicht parallel zu den anderen Zahnradgruppen angeordnet.

Gemäß einem Aspekt der Erfindung kann ein manuell betätigbares Bedienelement vorgesehen sein, wobei durch Betätigen des Bedienelements der Zahnradmechanismus angetrieben und die beiden Kofferteile relativ zueinander verschoben werden. Mit dem manuell betätigbaren Bedienelement kann der Motorradkoffer einfach und unkompliziert verstellt werden, wobei der Motorradkoffer dabei beispielsweise nicht auf eine fehleranfällige Elektronik und/oder eine geladene elektrische Batterie angewiesen ist.

Vorteilhafterweise hat der Zahnradmechanismus ein erstes und ein davon entferntes, zweites Getriebe, wobei mehrere baugleiche erste und mehrere baugleiche zweite Zahnradgruppen vorgesehen sind. Das erste Getriebe umfasst eine erste und eine zweite Zahnradgruppe und das zweite Getriebe eine weitere erste und eine weitere zweite Zahnradgruppe, wobei das erste Getriebe zwischen einer ersten Seitenwand des einen Kofferteils und einer gegenüberliegenden ersten Seitenwand des anderen Kofferteils angeordnet ist. Das zweite Getriebe ist zwischen einer zur ersten Seitenwand entgegengesetzten zweiten Seitenwand des einen Kofferteils und einer gegenüberliegenden zweiten Seitenwand des anderen Kofferteils angeordnet. Durch die Anordnung eines zweiten Getriebes kann die Verschiebekraft, die auf die beiden Kofferteile zur Einstellung des Stauvolumens aufgebracht wird, symmetrisch auf die Kofferteile aufgebracht werden.

Gemäß einer Ausgestaltung ist das Bedienelement mit dem ersten und dem zweiten Getriebe gekoppelt, sodass bei einer Betätigung des Bedienelements die beiden Getriebe synchron laufen. Das mit dem ersten und zweiten Getriebe gekoppelte Bedienelement schafft eine einfache mechanische Lösung für den synchronen Betrieb der zwei Getriebe, wobei durch den synchronen Betrieb eine gleichmäßigere Einleitung der Verschiebekraft auf die beiden Kofferteile ermöglicht wird. Gleichzeitig wird ein Verklemmen der Kofferteile vermieden.

Beispielsweise treibt jede erste Zahnradgruppe zumindest ein Abtriebszahnrad an, wobei die Abtriebszahnräder des ersten und des zweiten Getriebes jeweils zur Übertragung einer Verschiebekraft zwischen den beiden Kofferteilen ausgebildet sind. Insbesondere sind an den Abtriebszahnrädern exzentrisch gelagerte Abtriebshebel angeordnet, die mit einem der Kofferteile verbunden sind. An jedem Abtriebszahnrad wird die Drehbewegung bzw. das Drehmoment in eine Verschiebebewegung bzw. Verschiebekraft umgewandelt, wodurch sich die Kofferteile relativ zueinander gleichmäßig verschieben lassen.

Vorteilhafterweise haben beide Getriebe jeweils mehrere Abtriebszahnräder, insbesondere wobei die erste Zahnradgruppe unmittelbar in ein erstes Abtriebszahnrad eingreift und ferner in die zweite Zahnradgruppe eingreift, welche wiederrum in das zweite Abtriebszahnrad eingreift, sodass bei einer Betätigung der ersten Zahnradgruppen die beiden Abtriebszahnräder eines jeden Getriebes in unterschiedliche Richtungen gedreht werden. Durch die Verwendung von mehreren Abtriebszahnrädern kann die zur Verschiebung der beiden Kofferteile notwendige Verschiebekraft noch gleichmäßiger auf die Kofferteile aufgebracht werden. Die Verwendung von zwei Abtriebszahnrädern hat sich als besonders vorteilhaft herausgestellt, da eine symmetrische Krafteinleitung auf die Kofferteile ermöglicht wird und gleichzeitig die Anzahl der Abtriebszahnräder aus Kosten- und Gewichtsgründen möglichst klein gehalten wird.

Gemäß einem Aspekt der Erfindung sind die Abtriebszahnräder der beiden Getriebe Stirnräder, die die Stirnräder der ersten bzw. zweiten Zahnradgruppe kämmen. Die kämmenden Stirnräder übertragen das Drehmoment zwischen den Abtriebszahnrädern und den beiden Zahnradgruppen, wobei deren Drehachsen parallel zueinander angeordnet sind. Dies ist besonders für einen zentral hinter dem Motorradfahrer angeordneten Heckkoffer von Bedeutung, da hier keine konvex ausgeführte Kofferwand und in weiterer Folge keine schräge Anordnung der Drehachsen benötigt wird.

Gemäß einem weiteren Aspekt der Erfindung sind die als Stirnräder ausgebildeten Abtriebszahnräder mit einer Gerad- oder Schrägverzahnung versehen. Gerad- und Schrägverzahnungen haben verschiedene Vor- und Nachteile. Beispielsweise bietet eine Schrägverzahnung gegenüber einer Geradverzahnung eine bessere Laufruhe der im Eingriff stehenden Zahnräder, erzeugen aber im Betrieb eine axiale Kraftkomponente, welche von der Lagerung aufgenommen werden muss.

Alternativ können die Abtriebszahnräder auch als Kegelräder ausgeführt sein, wobei die Drehachsen der Abtriebszahnräder gewinkelt zu den Drehachsen der mit den Abtriebszahnräder im Eingriff stehenden Zahnradgruppen angeordnet sind. Hierdurch lassen sich die Abtriebszahnräder individueller positionieren.

In einer Ausführungsvariante weisen die ersten Zahnradgruppen der beiden Getriebe jeweils ein weiteres Stirnrad auf. Diese sind seitlich und in direktem Kontakt mit dem zugeordneten Kegelrad angeordnet, wobei das weitere Stirnrad mit dem Kegelrad gekoppelt ist und gemeinsam drehende und einer Drehachse zugeordnete Zahnräder aufweist. Durch diese weitere Stufe an den ersten Zahnradgruppen sind unterschiedliche Übersetzungsverhältnisse zwischen der ersten Zahnradgruppe und der im Eingriff stehenden zweiten Zahnradgruppe, sowie der ersten Zahnradgruppe dem im Eingriff stehenden Abtriebszahnrad möglich, wobei deren Drehachsen aufgrund der Stirnverzahnung parallel angeordnet werden können.

Gemäß einer Ausführungsform sind die beiden Getriebe zu einer Spiegelebene gespiegelt angeordnet. Hierdurch fluchten die Drehachsen der jeweils spiegelgleichen Getriebe. Diese Anordnung eignet sich besonders für einen Heckkoffer, welcher hinter einem Motorradfahrer angebracht wird. Bei diesem ist kein aerodynamisches Design an einer Seite des Motorradkoffers notwendig, weshalb die Getriebe des Motorradkoffers der Einfachheit halber spiegelgleich ausgeführt werden können.

Gemäß einem Aspekt der Erfindung stehen bei zumindest einem Getriebe das Kegelrad der ersten Zahnradgruppe mit dem Kegelrad der zweiten Zahnradgruppe im Eingriff und die Drehachsen dieser im Eingriff stehenden Zahnradgruppen sind gewinkelt zueinander angeordnet, insbesondere wobei die diesem Getriebe zugeordneten Seitenwände des Motorradkoffers konvex ausbauchen. Die im Eingriff stehenden Kegelrädern bringen den Vorteil mit sich, dass deren zugehörige Drehachsen gewinkelt zueinander angeordnet werden können, sodass das Getriebedesign der konvexen Seitenwand angepasst ist. Dies ermöglicht ein aerodynamisches Design einer Seitenwand des Motorradkoffers, bei gleichzeitig größtmöglichem Stauvolumen.

Ergänzend oder alternativ zu den vorhin genannten Aspekten können bei zumindest einem Getriebe Stirnräder der Zahnradgruppen im Eingriff miteinander stehen und die Drehachsen dieser im Eingriff stehenden Zahnradgruppen sind parallel zueinander angeordnet, d.h. die Drehachsen der im Eingriff stehenden Stirnräder sind parallel zueinander angeordnet. Falls im Motorradkoffer bereits ein weiteres Getriebe mit einer gewinkelten Drehachsenanordnung gemäß dem zuvor genannten Aspekt eingesetzt wird, betrifft die beschriebene parallele Anordnung das andere Getriebe.

Die Getriebe sind vorzugsweise am inneren Kofferteil gelagert und über Abtriebshebel mit dem äußeren Kofferteil gekoppelt.

Die Erfindung wird nachstehend anhand verschiedener Ausführungsbeispiele erläutert, die in den beigefügten Zeichnungen gezeigt sind. Es zeigen:
- Fig. 1 einen erfindungsgemäßen Motorradkoffer gemäß einer Ausführungsform in einer Vorderansicht, wobei der Motorradkoffer geöffnet dargestellt ist;
- Fig. 2 der Motorradkoffer aus Fig. 1 in einer weiteren Vorderansicht, wobei die beiden Getriebe des Motorradkoffers zur vollständigen Sichtbarkeit freigelegt dargestellt sind;
- Fig. 3 ein erstes Getriebe des Motorradkoffers aus Fig. 1 in Richtung III gemäß Figur 1 gesehen, wobei das äußere Kofferteil nicht dargestellt ist;
- Fig. 4 ein zweites gegenüberliegendes Getriebe des Motorradkoffers aus Fig. 1 in Richtung IV gemäß Figur 1 gesehen, wobei das äußere Kofferteil nicht dargestellt ist;
- Fig. 5 das erste Getriebe des Motorradkoffers aus Fig. 1 in einer perspektivischen Ansicht, wobei zusätzlich ein Teilstück des inneren Kofferteils dargestellt ist;
- Fig. 6 das zweite gegenüberliegende Getriebe des Motorradkoffers aus Fig. 1 in einer perspektivischen Ansicht, wobei zusätzlich ein Teilstück des inneren Kofferteils dargestellt ist;
- Fig. 7 einen erfindungsgemäßen Motorradkoffer gemäß einer weiteren Ausführungsform in einer Vorderansicht, wobei der Motorradkoffer geöffnet dargestellt ist;
- Fig. 8 der Motorradkoffer aus Fig. 7 in einer weiteren Vorderansicht, wobei die beiden Getriebe des Motorradkoffers zur vollständigen Sichtbarkeit freigelegt dargestellt sind;

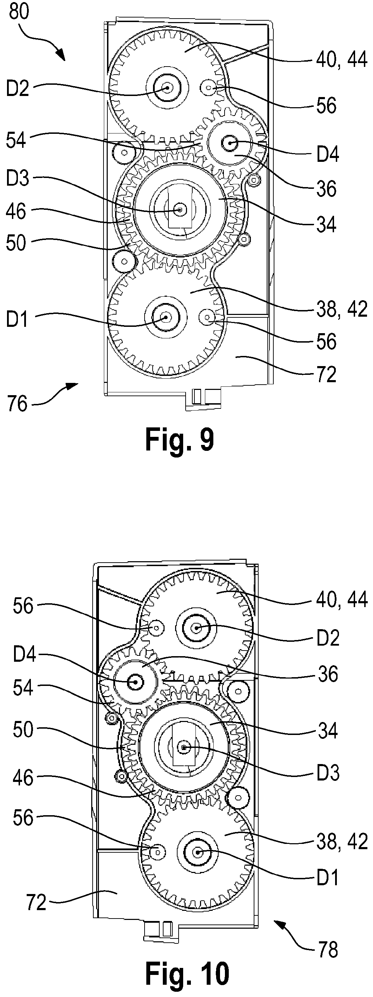

- Fig. 9 das erste Getriebe des Motorradkoffers aus Fig. 7 in Richtung IX gesehen, wobei das äußere Kofferteil nicht dargestellt ist;
- Fig. 10 das zweite gegenüberliegende Getriebe des Motorradkoffers aus Fig. 7 in Richtung X gesehen, wobei das äußere Kofferteil nicht dargestellt ist;

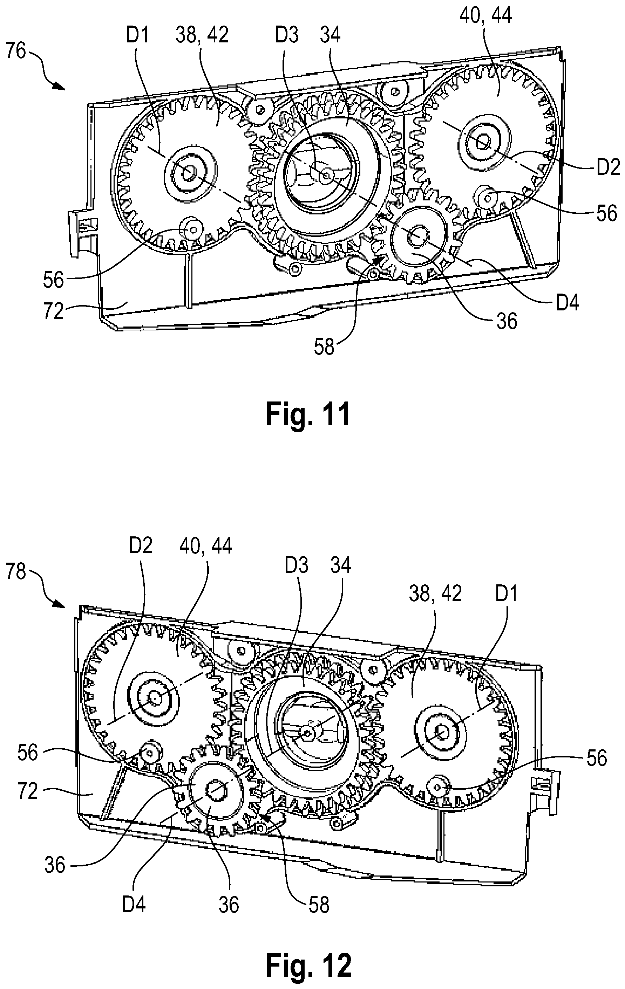

- Fig. 11 das erste Getriebe des Motorradkoffers aus Fig. 7 in einer perspektivischen Ansicht, wobei zusätzlich ein Teilstück des inneren Kofferteils dargestellt ist; und
- Fig. 12 das zweite gegenüberliegende Getriebe des Motorradkoffers aus Fig. 7 in einer perspektivischen Ansicht, wobei zusätzlich ein Teilstück des inneren Kofferteils dargestellt ist.

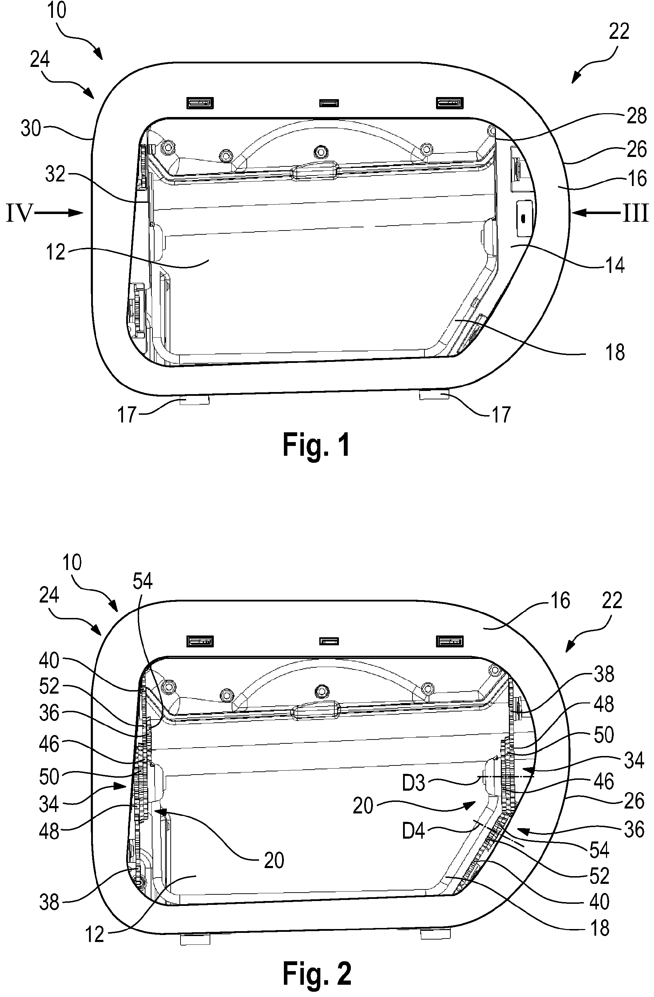

In Figur 1 ist eine Ausführungsform eines Motorradkoffers 10 gezeigt, der zum Transport von Gegenständen, die an einem Motorrad mitgeführt werden sollen, dient. Aufgrund seiner besonderen aerodynamischen Form eignet sich diese Ausführungsform besonders als Seitenkoffer für ein Motorrad.

Der Motorradkoffer 10 hat eine Klappe (nicht dargestellt) die geöffnet und geschlossen werden kann, um Gegenstände in einen Stauraum 12 des Motorradkoffers 10 legen zu können und um diese Gegenstände anschließend vor dem Herausfallen aus dem Motorradkoffer 10 zu bewahren. In sämtlichen gezeigten Figuren ist die Klappe zur besseren Sichtbarkeit der anderen Bauteile nicht dargestellt.

Zudem hat der Motorradkoffer 10 ein inneres und äußeres Kofferteil 14, 16, die relativ zueinander verschiebbar sind, um das Stauvolumen des Motorradkoffers 10 variabel anzupassen. Hierfür ist der Motorradkoffer 10 mit einem bügelförmigen Bedienelement 18 ausgestatten, mit welchen sich das Stauvolumen von Hand einstellen lässt.

Der Motorradkoffer umfasst im Wesentlichen zwei Halbschalen, die mit den offenen Seiten aufeinander zugerichtet und ineinandergesteckt sind. Die innere Halbschale wird durch ein inneres Kofferteil 14 gebildet. Die äußere Halbschale ist zweigeteilt und umfasst ein ringförmiges, äußeres Kofferteil 16 und eine schalenartige Klappe (nicht gezeigt), die zum Öffnen des Motorradkoffers 10 schwenkbar am äußeren Kofferteil 16 angebracht ist (siehe Schwenklager 17).

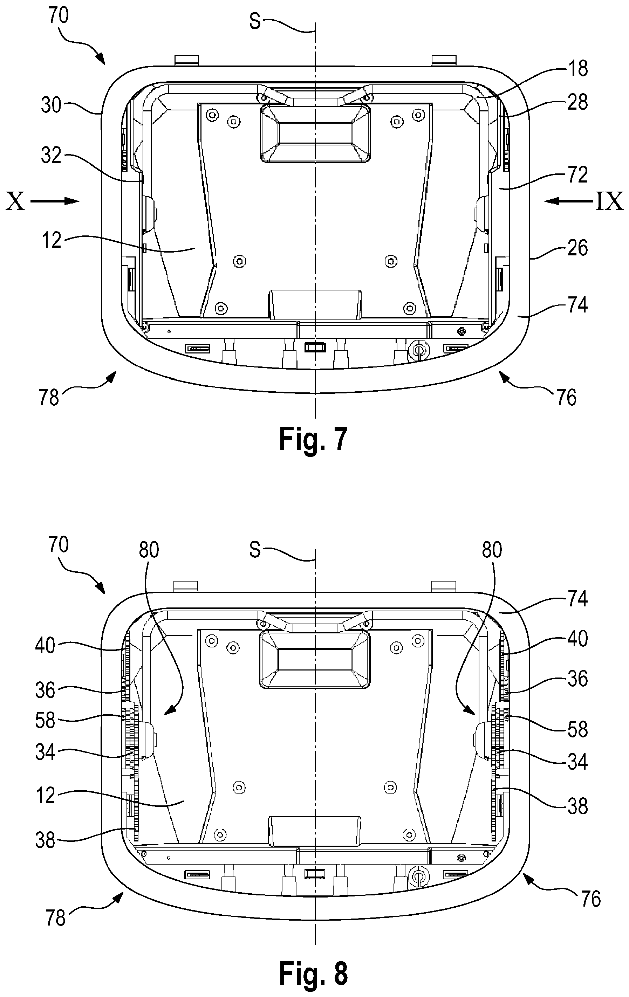

Das Bedienelement 18 hat zwei Endlagen, die mit dem größtmöglichen bzw. kleinstmöglichen Stauvolumen des Motorradkoffers 10 korrespondieren. In den Figuren 1 und 2 ist das Bedienelement 18 nach unten gerichtet und befindet sich ferner in einer Endlage. In einer zweiten Endlage gemäß den Figuren 7 und 8 ist das Bedienelement 18 nach oben gerichtet.

Zudem ist der Motorradkoffer 10 mit einem Zahnradmechanismus 20 (siehe Figur 2) ausgestattet, der die rotatorische Bewegung des Bedienelements 18 während des Verstellens des Stauvolumens in eine translatorische Relativbewegung der beiden Kofferteile 14, 16 zueinander umwandelt.

Das Bedienelement 18 ist an den Zahnradmechanismus 20 gekoppelt, um die vom Bediener von Hand ausgeführte Schwenkbewegung an den Zahnradmechanismus 20 weiterzuleiten.

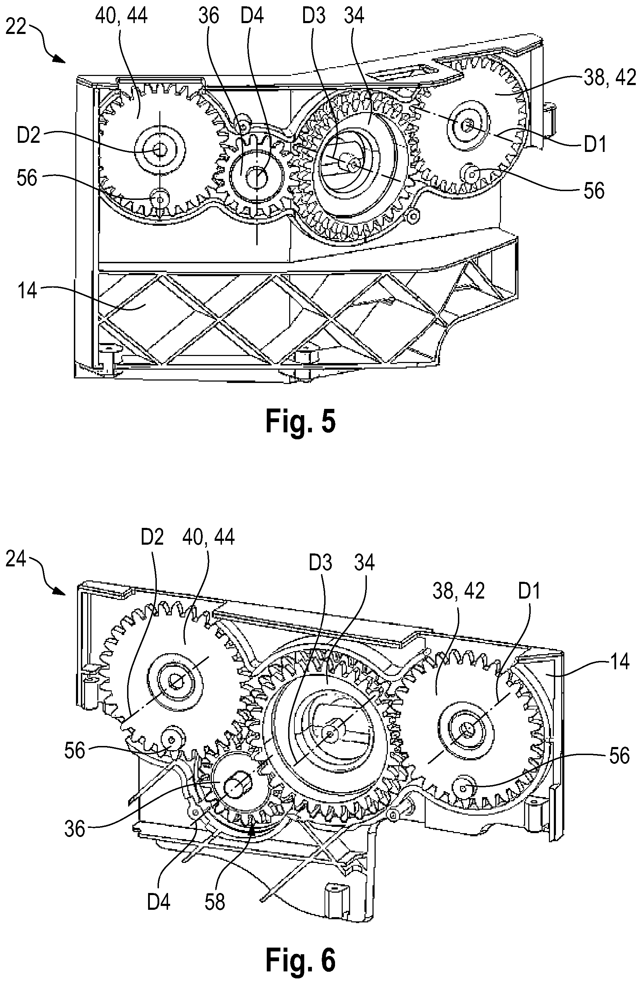

Der Zahnradmechanismus 20 selbst umfasst in der Ausführungsform gemäß den Figuren 1 bis 6 ein erstes und ein zweites Getriebe 22, 24. Die beiden Getriebe 22, 24 werden synchron betrieben, da das erste und zweite Getriebe 22, 24 durch das manuell betätigbare Bedienelement 18 drehfest miteinander gekoppelt sind. Eine Übersicht des Zahnradmechanismus 20 mit den beiden Getrieben 22, 24 ist der Figur 2 zu entnehmen, wobei hier zur besseren Übersicht das innere Kofferteil 14 nicht dargestellt ist.

Die beiden Getriebe 22, 24, die am inneren Kofferteil 14 gelagert sind, dienen dazu, die Verschiebekraft, welche zum Verschieben der beiden Kofferteile 14, 16 zueinander benötigt wird, gleichmäßig auf die Kofferteile 14, 16 zu übertragen.

Alternativ kann der Zahnradmechanismus 20 auch nur ein Getriebe (nicht dargestellt) bei entsprechend guter Lagerung der beiden Kofferteile 14, 16 umfassen.

Da bei der vorliegenden Ausführungsform ein aerodynamisches Design an einer ersten, konvexen Seitenwand 26 des äußeren Kofferteils 16 vorgesehen ist, wurde das hinter dieser Seitenwand 26 in Richtung des Stauraums 12 liegende erste Getriebe 22 der konvexen Form der Seitenwand 26 entsprechend angepasst, um das Stauvolumen möglichst zu maximieren. Dabei ist die erste Seitenwand 26 die dem Fahrtwind zugewandte Seite nach der Anbringung des Motorradkoffers 10 an einem Motorrad.

Wie in Figur 1 gezeigt, ist das erste Getriebe 22 zwischen der ersten Seitenwand 26 des äußeren Kofferteils 16 und einer gegenüberliegenden ersten Seitenwand 28 des inneren Kofferteils 14, angeordnet. Das zweite Getriebe 24 ist wiederum zwischen einer zur ersten Seitenwand 26 entgegengesetzten zweiten Seitenwand 30 des einen Kofferteils, hier das äußere Kofferteil 16, und einer gegenüberliegenden zweiten Seitenwand 32 des anderen Kofferteils, hier das äußere Kofferteil 16, angeordnet. Die zweiten Seitenwände 30, 32 sind im Wesentlichen eben.

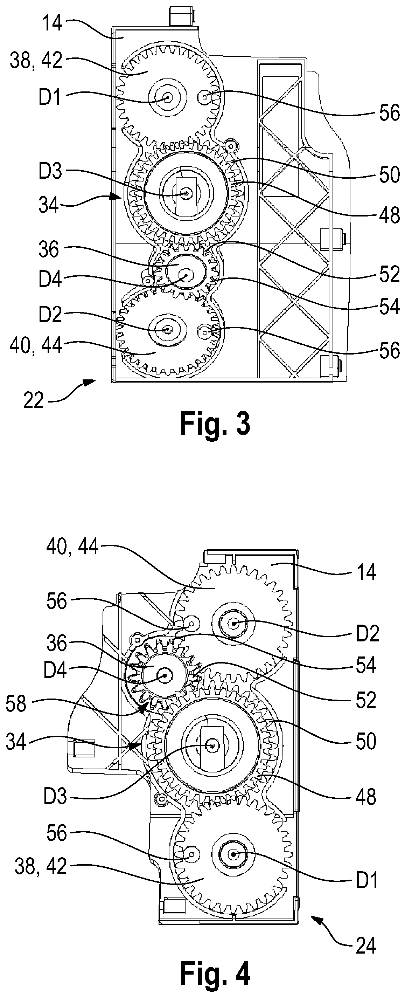

Nachfolgend wird mit Bezug auf die Figuren 3 und 4 auf die Gemeinsamkeiten der beiden Getriebe 22, 24 eingegangen. Sowohl das erste als auch das zweite Getriebe 22, 24 umfassen jeweils eine erste und eine zweite Zahnradgruppe 34, 36 sowie ein erstes und ein zweites Abtriebszahnrad 38, 40, wobei die Abtriebszahnräder 38, 40 als Stirnräder 42, 44 ausgeführt sind. Jedes der Abtriebszahnräder 38, 40 hat eine eigene Drehachse D1, D2.

Die erste Zahnradgruppe 34 (siehe Figur 2) hat zwei Stirnräder 46, 48 und ein dazwischenliegendes Kegelrad 50, während die zweite Zahnradgruppe 36 ein Stirnrad 52 und ein Kegelrad 54 hat. Die Zahnräder einer Zahnradgruppe 34, 36 haben wiederum jeweils eine gemeinsame Drehachse D3, D4 und sind jeweils drehfest miteinander gekoppelt.

Dabei fungieren die ersten Zahnradgruppen 34 der beiden Getriebe 22, 24 als Antriebszahnräder. Von den ersten Zahnradgruppen 36 teilt sich das Antriebsdrehmoment auf in Richtung zu den beiden Abtrieszahnrädern 38, 40 auf. Dabei wird das erste Antriebszahnrad 38 direkt über die erste Zahnradgruppe 34 und das zweite Abtriebszahnrad 40 über die dazwischenliegende zweite Zahnradgruppe 36 angetrieben. Die beiden Abtriebszahnräder 38, 40 der beiden Getriebe 22, 24 werden dadurch in unterschiedliche Richtungen gedreht.

Das erste Getriebe 22 unterscheidet sich vom zweiten Getriebe 24 durch die unterschiedliche Kopplung der ersten mit der zweiten Zahnradgruppe 34, 36. Zur Verdeutlichung der unterschiedlichen Kopplung werden nun die Figuren 2 bis 6 genauer betrachtet.

Beim ersten Getriebe 22 greift das Kegelrad 50 der ersten Zahnradgruppe 34 in das Kegelrad 54 der zweiten Zahnradgruppe 36, wobei die Drehachsen D3, D4 der im Eingriff stehenden Zahnradgruppen 34, 36 gewinkelt zueinander angeordnet sind.

Beim zweiten Getriebe 24 hingegen greift das Stirnrad 46 der ersten Zahnradgruppe 34 in das Stirnrad 52 der zweiten Zahnradgruppe 36, wobei die Drehachsen D3, D4 der im Eingriff stehenden Zahnradgruppen 34, 36 parallel zueinander angeordnet sind.

In dem gezeigten Ausführungsbeispiel hat das Kegelrad 54 der zweiten Zahnradgruppe 36 einen kleinsten Fußkreisdurchmesser, der größer ist als der Fußkreisdurchmesser des in unmittelbaren Kontakt mit dem Kegelrad 54 stehenden Stirnrads 52 der zweiten Zahnradgruppe 36. Dadurch wird an der ersten Zahnradgruppe 34 ein Absatz 58 gebildet (siehe Figur 8), der als axialer Anschlag zur Sicherung der zweiten Zahnradgruppe 36 verwendet werden kann.

Die Bildung des Absatzes 58 ist jedoch nur beispielhaft zu verstehen. So könnte der kleinste Fußkreisdurchmesser des Kegelrads 54 auch gleich groß sein wie der Fußkreisdurchmesser des Stirnrades 52, falls die Zähne des Kegelrades 54 versetzt zu denen des Stirnrades 52 sind.

Wie bereits erwähnt, sind die ersten Zahnradgruppen 34 mit zwei Stirnrädern 46, 48 ausgestattet, obwohl beim ersten Getriebe 22 nur das erste Stirnrad 46 im Eingriff mit einem weiteren Stirnrad 42 steht. Ebenso sind die ersten Zahnradgruppen 34 mit einem Kegelrad 50 ausgestattet, obwohl dieses Kegelrad 50 beim zweiten Getriebe 24 mit keinem weiteren Kegelrad im Eingriff steht. Diese spezielle Ausführung der ersten Zahnradgruppe 34 erlaubt es, eine baugleiche erste Zahnradgruppe 36 im ersten als auch im zweiten Getriebe 22, 24 zu verwenden. Dabei ist zu beachten, dass die ersten Zahnradgruppen 34 der beiden Getriebe 22, 24 spiegelverkehrt zueinander angeordnet sind.

An den Abtriebszahnrädern 38, 40 ist jeweils ein exzentrisch zu der jeweiligen Drehachse des Antriebszahnrads 38, 40 gelagerter Abtriebshebel angeordnet, die mit dem äußeren Kofferteil 16 verbunden sind. Diese Abtriebshebel sind die Bindeglieder zwischen den Getrieben 22, 24 und dem äußeren Kofferteil 16. In den Figuren 3, 4, 5 und 6 sind die Lagerungen 56 der Abtriebshebel gezeigt, wobei die Abtriebshebel selbst nicht dargestellt sind. Durch Verschieben der Abtriebshebel wird die äußere Halbschale, also das äußere Kofferteil 16 mit der Klappe nach außen und weg vom inneren Kofferteil 14 oder zum inneren Kofferteil 14 hin verstellt, um das Stauvolumen des Motorradkoffers 10 zu verändern.

Der Drehmomentfluss während des Verstellens des Stauvolumens geht vom Bedienelement 18 aus, teilt sich dann auf die ersten Zahnradgruppen 34 der beiden Getriebe 22, 24 auf, da je eine erste Zahnradgruppe 34 mit je einem Ende des Bedienelements 18 drehfest gekoppelt ist. Der Drehmomentfluss teilt sich dann erneut in den ersten Zahnradgruppen 34 und führt von den ersten Zahnradgruppen 36 direkt zu den ersten Abtriebszahnrädern 38 bzw. über die zweiten Zahnradgruppen 36 zu den zweiten Abtriebszahnrädern 40.

Die Figur 7 zeigt eine weitere Ausführungsform des Motorradkoffers 70. Dieser Motorradkoffer 70 eignet sich beispielsweise als Heckkoffer. Im Gegensatz zur vorher beschriebenen Ausführungsform hat das äußere Kofferteil 72 keine konvex ausgeformte erste Seitenwand 26. Diese wird nicht benötigt, da der Motorradkoffer 70 beim Einsatz als Heckkoffer im Windschatten eines Motorradfahrers angeordnet wird.

Das innere Kofferteil 74 des Motorradkoffers 70 unterscheidet sich vom inneren Kofferteil 14 des Motorradkoffers 10, da aufgrund des veränderten äußeren Kofferteils 72 und des veränderten ersten Getriebes 76 eine Anpassung der Form notwendig ist.

Dadurch, dass die Seitenwand 26 nicht konvex ausgeformt ist, wird auch kein Getriebe mit gewinkelt zueinander angeordneten Drehachsen D3, D4 der ersten und zweiten Zahnradgruppe 34, 36 benötigt. Deshalb unterscheidet sich das erste Getriebe 76 dieser Ausführungsform zu dem beschrieben ersten Getriebe 22 der vorherigen Ausführungsform. Genauer gesagt entspricht das erste Getriebe 76 dieser Ausführungsform dem vorherigen zweiten Getriebe 24.

Das zweite Getriebe 78 entspricht wiederum dem ersten Getriebe 76, wobei die beiden Getriebe 76, 78 um eine Spiegelebene S zueinander gespiegelt angeordnet sind (siehe Figur 8). Dadurch fluchten die Drehachsen D1, D2, D3, D4 der jeweils spiegelgleichen Zahnradgruppen 34, 36 und Abtriebszahnräder 38, 40.

In weiterer Folge weisen das erste und zweite Getriebe 76, 78 alle zuvor beschriebenen Merkmale und auch die Funktionsweise des zweiten Getriebes 24 auf. Zusammen bilden die beiden Getriebe 76, 78 den Zahnradmechanismus 80 des Motorradkoffers 70, wobei dessen Funktionsweise analog zum Zahnradmechanismus 20 des Motorradkoffers 10 ist.

## Patentansprüche

1. Motorradkoffer mit einem inneren Kofferteil (14, 74), das an einem Motorrad befestigbar ist, und einem mit dem inneren Kofferteil (14, 74) verbundenen äußeren Kofferteil (16, 72), das seitlich relativ zum inneren Kofferteil (14, 74) verschieblich ist, und einem die Kofferteile (14, 16, 72, 74) koppelnden, angetriebenen Zahnradmechanismus (20, 80), wobei durch Verschieben des äußeren Kofferteils (16, 72) relativ zum inneren Kofferteil (14, 74) die Breite und somit das Stauvolumen des Motorradkoffers (10, 70) verstellt werden können, wobei der Zahnradmechanismus (20, 80) mindestens eine erste und eine zweite Zahnradgruppe (34, 36) umfasst, die jeweils mehrere miteinander gekoppelte, gemeinsam drehende und einer Drehachse (D3, D4) zugeordnete Zahnräder aufweisen, wobei die Zähne von benachbarten Zahnradgruppen (34, 36) miteinander kämmen, **dadurch gekennzeichnet, dass** die Zahnradgruppen (34, 36) jeweils wenigstens ein Stirnrad (46, 52) und wenigstens ein Kegelrad (50, 54) aufweisen und entweder die Stirnräder (46, 52) oder die Kegelräder (50, 54) benachbarter Zahnradgruppen (34, 36) kämmen.

2. Motorradkoffer nach Anspruch 1, **dadurch gekennzeichnet, dass** ein manuell betätigbares Bedienelement (18) vorgesehen ist, wobei durch Betätigen des Bedienelements (18) der Zahnradmechanismus (20, 80) angetrieben und die beiden Kofferteile (14, 16, 72, 74) relativ zueinander verschoben werden.

3. Motorradkoffer nach Anspruch 1 oder 2, **dadurch gekennzeichnet, dass** der Zahnradmechanismus (20, 80) ein erstes und ein davon entferntes, zweites Getriebe (22, 24) aufweist, wobei mehrere baugleiche erste und mehrere baugleiche zweite Zahnradgruppen (34, 36) vorgesehen sind und das erste Getriebe (22) eine erste und eine zweite Zahnradgruppe (34, 36) und das zweite Getriebe (24) eine weitere erste und eine weitere zweite Zahnradgruppe (34, 36) umfasst, wobei das erste Getriebe (22) zwischen einer ersten Seitenwand (26) des einen Kofferteils und einer gegenüberliegenden ersten Seitenwand (28) des anderen Kofferteils und das zweite Getriebe (24) zwischen einer zur ersten Seitenwand (26) entgegengesetzten zweiten Seitenwand (30) des einen Kofferteils und einer gegenüberliegenden zweiten Seitenwand (32) des anderen Kofferteils angeordnet ist.

4. Motorradkoffer nach Anspruch 2 und 3, **dadurch gekennzeichnet, dass** das Bedienelement (18) mit dem ersten und dem zweiten Getriebe (22, 24) gekoppelt ist, sodass bei einer Betätigung des Bedienelements (18) die beiden Getriebe (22, 24) synchron laufen.

5. Motorradkoffer nach einem der Ansprüche 2 bis 4, **dadurch gekennzeichnet, dass** jede erste Zahnradgruppe (34) zumindest ein Abtriebszahnrad (38) antreibt, wobei die Abtriebszahnräder (38) des ersten und des zweiten Getriebes (22, 24) jeweils zur Übertragung einer Verschiebekraft zwischen den beiden Kofferteilen (14, 16, 72, 74) ausgebildet sind, insbesondere indem an den Abtriebszahnrädern (38) exzentrisch gelagerte Abtriebshebel angeordnet sind, die mit einem der Kofferteile (14, 16, 72, 74) verbunden sind.

6. Motorradkoffer nach Anspruch 5, **dadurch gekennzeichnet, dass** beide Getriebe (22, 24) jeweils mehrere Abtriebszahnräder (38, 40) haben, insbesondere wobei die erste Zahnradgruppe (34) unmittelbar in ein erstes Abtriebszahnrad (38) eingreift und ferner in die zweite Zahnradgruppe (36) eingreift, welche wiederum in das zweite Abtriebszahnrad (40) eingreift, sodass bei einer Betätigung der ersten Zahnradgruppen (38) die beiden Abtriebszahnräder (38, 40) eines jeden Getriebes (22, 24) in unterschiedliche Richtungen gedreht werden.

7. Motorradkoffer nach Anspruch 5 oder 6, **dadurch gekennzeichnet, dass** die Abtriebszahnräder (38, 40) der beiden Getriebe (22, 24) Stirnräder (42, 44) sind, die mit den Stirnrädern (46, 52) der ersten bzw. zweiten Zahnradgruppe (34, 36) kämmen.

8. Motorradkoffer nach einem der Ansprüche 3 bis 7, **dadurch gekennzeichnet, dass** die ersten Zahnradgruppen (34) der beiden Getriebe (22, 24) jeweils ein weiteres Stirnrad (48) aufweisen und diese seitlich und in direktem Kontakt mit dem zugeordneten Kegelrad (50) angeordnet sind, wobei das weitere Stirnrad (48) mit dem Kegelrad (50) gekoppelt ist und gemeinsam drehende und einer Drehachse (D3) zugeordnete Zahnräder aufweist.

9. Motorradkoffer nach einem der Ansprüche 2 bis 8, **dadurch gekennzeichnet, dass** die beiden Getriebe (22, 24) zu einer Spiegelebene (S) gespiegelt angeordnet sind.

10. Motorradkoffer nach einem der Ansprüche 2 bis 9, **dadurch gekennzeichnet, dass** bei zumindest einem Getriebe (22, 24) das Kegelrad (50) der ersten Zahnradgruppe (34) mit dem Kegelrad (54) der zweiten Zahnradgruppe (36) im Eingriff steht und die Drehachsen (D3, D4) dieser im Eingriff stehenden Zahnradgruppen (34, 36) schräg zueinander angeordnet sind, insbesondere wobei die diesem Getriebe (22, 24) zugeordneten Seitenwände konvex ausbauchen.

11. Motorradkoffer nach einem der Ansprüche 2 bis 10, **dadurch gekennzeichnet, dass** bei zumindest einem Getriebe (22, 24) Stirnräder (46, 48, 52) der Zahnradgruppen (34, 36) im Eingriff miteinander stehen und die Drehachsen (D3, D4) dieser im Eingriff stehenden Zahnradgruppen (34, 36) parallel zueinander angeordnet sind.

## Claims

1. Motorcycle case having an inner case part (14, 74) which can be fastened to a motorcycle, and an outer case part (16, 72) which is connected to the inner case part (14, 74) and can be displaced laterally relative to the inner case part (14, 74), and a driven gearwheel mechanism (20, 80) coupling the case parts (14, 16, 72, 74), wherein the width and thus the storage volume of the motorcycle case (10, 70) can be adjusted by displacing the outer case part (16, 72) relative to the inner case part (14, 74), wherein the gearwheel mechanism (20, 80) comprises at least a first and a second gearwheel group (34, 36), which each have a plurality of gears coupled to one another, rotating together and assigned to an axis of rotation (D3, D4), wherein the teeth of adjacent gearwheel groups (34, 36) mesh, **characterized in that** the gearwheel groups (34, 36) each have at least one spur gear (46, 52) and at least one bevel gear (50, 54) and either the spur gears (46, 52) or the bevel gears (50, 54) of adjacent gearwheel groups (34, 36) mesh.

2. Motorcycle case according to Claim 1, **characterized in that** a manually operable control element (18) is provided, wherein the gearwheel mechanism (20, 80) is driven by operating the control element (18) and the two case parts (14, 16, 72, 74) are displaced relative to each other.

3. Motorcycle case according to Claim 1 or 2, **characterized in that** the gearwheel mechanism (20, 80) has a first and a second gear mechanism (22, 24) at a distance therefrom, wherein a plurality of identical first and a plurality of identical second gearwheel groups (34, 36) are provided, and the first gear mechanism (22) comprises a first and a second gearwheel group (34, 36), and the second gear mechanism (24) comprises a further first and a further second gearwheel group (34, 36), wherein the first gear mechanism (22) is arranged between a first side wall (26) of the one case part and an opposite first side wall (28) of the other case part, and the second gear mechanism (24) is arranged between a second side wall (30) of the one case part, opposite to the first side wall (26), and an opposite, second side wall (32) of the other case part.

4. Motorcycle case according to Claims 2 and 3, **characterized in that** the control element (18) is coupled to the first and the second gear mechanism (22, 24), so that when the control element (18) is operated, the two agear mechanisms (22, 24) run synchronously.

5. Motorcycle case according to one of Claims 2 to 4, **characterized in that** each first gearwheel group (34) drives at least one output gear (38), wherein the output gears (38) of the first and of the second gear mechanism (22, 24) are each designed to transmit a displacement force between the two case parts (14, 16, 72, 74), in particular by eccentrically mounted output levers, which are connected to one of the case parts (14, 16, 72, 74), being arranged on the output gears (38).

6. Motorcycle case according to Claim 5, **characterized in that** both gear mechanisms (22, 24) each have a plurality of output gears (38, 40), in particular wherein the first gearwheel group (34) meshes directly with a first output gear (38) and also meshes with the second gearwheel group (36), which in turn meshes with the second output gear (40), so that when the first gearwheel groups (38) are actuated, the two output gears (38, 40) of each gear mechanism (22, 24) are rotated in different directions.

7. Motorcycle case according to Claim 5 or 6, **characterized in that** the output gears (38, 40) of the two gear mechanisms (22, 24) are spur gears (42, 44), which mesh with the spur gears (46, 52) of the first and second gearwheel group (34, 36).

8. Motorcycle case according to one of Claims 3 to 7, **characterized in that** the first gearwheel groups (34) of the two gear mechanisms (22, 24) each have a further spur gear (48), and these are arranged at the side of and in direct contact with the associated bevel gear (50), wherein the further spur gear (48) is coupled to the bevel gear (50) and has gears that rotate together and are assigned to one axis of rotation (D3).

9. Motorcycle case according to one of Claims 2 to 8, **characterized in that** the two gear mechanisms (22, 24) are arranged in mirror-image fashion relative to a mirror plane (S).

10. Motorcycle case according to one of Claims 2 to 9, **characterized in that** in at least one gear mechanism (22, 24) the bevel gear (50) of the first gearwheel group (34) meshes with the bevel gear (54) of the second gearwheel group (36) and the axes of rotation (D3, D4) of these meshing gearwheel groups (34, 36) are arranged at an angle to each other, in particular wherein the side walls that are associated with this gear mechanism (22, 24) bulge out convexly.

11. Motorcycle case according to one of Claims 2 to 10, **characterized in that** in at least one gear mechanism (22, 24), spur gears (46, 48, 52) of the gearwheel groups (34, 36) mesh and the axes of rotation (D3, D4) of these meshing gearwheel groups (34, 36) are arranged parallel to each other.

## Revendications

1. Boîtier de motocyclette comportant une partie de boîtier intérieure (14, 74), qui peut être fixée sur une motocyclette, et une partie de boîtier extérieure (16, 72) reliée à la partie de boîtier intérieure (14, 74), qui peut être coulissée latéralement par rapport à la partie de boîtier intérieure (14, 74), et un mécanisme à roue dentée (20, 80) entraîné couplant les parties de boîtier (14, 16, 72, 74), la largeur et ainsi le volume de rangement du boîtier de motocyclette (10, 70) pouvant être ajustés par le coulissement de la partie de boîtier extérieure (16, 72) par rapport à la partie de boîtier intérieure (14, 74), le mécanisme à roue dentée (20, 80) comprenant au moins un premier et un deuxième groupe de roues dentées (34, 36), qui comportent respectivement plusieurs roues dentées couplées les unes aux autres, tournant conjointement et associées à un axe de rotation (D3, D4), les dents de groupes de roues dentées (34, 36) adjacents s'engrenant les unes avec les autres, **caractérisé en ce que**
les groupes de roues dentées (34, 36) comportent chacun au moins une roue cylindrique (46, 52) et au moins une roue conique (50, 54) et soit les roues cylindriques (46, 52) soit les roues coniques (50, 54) de groupes de roues dentées (34, 36) adjacents s'engrènent.

2. Boîtier de motocyclette selon la revendication 1, **caractérisé en ce qu'**un élément de commande (18) pouvant être actionné manuellement est prévu, le mécanisme à roue dentée (20, 80) étant entraîné par l'actionnement de l'élément de commande (18) et les deux parties de boîtier (14, 16, 72, 74) étant coulissées l'une par rapport à l'autre.

3. Boîtier de motocyclette selon la revendication 1 ou 2, **caractérisé en ce que** le mécanisme à roue dentée (20, 80) comporte un premier et un deuxième engrenage (22, 24) éloigné de celui-ci, plusieurs premiers groupes de roues dentées similaires et plusieurs deuxièmes groupes de roues dentées similaires (34, 36) étant prévus et le premier engrenage (22) comprenant un premier et un deuxième groupes de roues dentées (34, 36) et le deuxième engrenage (24) comprenant un autre premier groupe de roues dentées et un autre deuxième groupe de roues dentées (34, 36), le premier engrenage (22) étant disposé entre une première paroi latérale (26) d'une partie de boîtier et une première paroi latérale (28) opposée de l'autre partie de boîtier et le deuxième engrenage (24) étant disposé entre une deuxième paroi latérale (30) d'une partie de boîtier opposée à la première paroi latérale (26) et une deuxième paroi latérale (32) opposée de l'autre partie de boîtier.

4. Boîtier de motocyclette selon la revendication 2 et 3, **caractérisé en ce que** l'élément de commande (18) est couplé au premier et au deuxième engrenage (22, 24) si bien que les deux engrenages (22, 24) se déplacent de manière synchrone lors d'un actionnement de l'élément de commande (18).

5. Boîtier de motocyclette selon l'une des revendications 2 à 4, **caractérisé en ce que** chaque premier groupe de roues dentées (34) entraîne au moins une roue dentée de sortie (38), les roues dentées de sortie (38) du premier et du deuxième engrenage (22, 24) étant réalisées respectivement pour le transfert d'une force de coulissement entre les deux parties de boîtier (14, 16, 72, 74), en particulier **en ce que** des leviers de sortie montés de manière excentrique sur les roues dentées de sortie (38) sont disposés, qui sont reliés à une des parties de boîtier (14, 16, 72, 74).

6. Boîtier de motocyclette selon la revendication 5, **caractérisé en ce que** les deux engrenages (22, 24) ont chacun plusieurs roues dentées de sortie (38, 40), en particulier le premier groupe de roues dentées (34) venant en prise directement avec une première roue dentée de sortie (38) et venant en prise en outre avec le deuxième groupe de roues dentées (36), lequel vient en prise à son tour avec la deuxième roue dentée de sortie (40) si bien que lors d'un actionnement des premiers groupes de roues dentées (38), les deux roues dentées de sortie (38, 40) de chaque engrenage (22, 24) sont tournées dans des directions différentes.

7. Boîtier de motocyclette selon la revendication 5 ou 6, **caractérisé en ce que** les roues dentées de sortie (38, 40) des deux engrenages (22, 24) sont des roues cylindriques (42, 44), qui s'engrènent avec les roues cylindriques (46, 52) du premier ou du deuxième groupe de roues dentées (34, 36).

8. Boîtier de motocyclette selon l'une des revendications 3 à 7, **caractérisé en ce que** les premiers groupes de roues dentées (34) des deux engrenages (22, 24) comportent chacun une autre roue cylindrique (48) et ceux-ci sont disposés sur le côté et en contact direct avec la roue conique (50) associée, l'autre roue cylindrique (48) étant couplée à la roue conique (50) et comportant des roues dentées tournant conjointement et associées à un axe de rotation (D3).

9. Boîtier de motocyclette selon l'une des revendications 2 à 8, **caractérisé en ce que** les deux engrenages (22, 24) sont disposés en miroir par rapport à un plan miroir (S).

10. Boîtier de motocyclette selon l'une des revendications 2 à 9, **caractérisé en ce que** pour au moins un engrenage (22, 24), la roue conique (50) du premier groupe de roues dentées (34) est en prise avec la roue conique (54) du deuxième groupe de roues dentées (36) et les axes de rotation (D3, D4) desdits groupes de roues dentées (34, 36) en prise sont disposés à l'oblique les uns par rapport aux autres, en particulier les parois latérales associées audit engrenage (22, 24) étant bombées de manière convexe.

11. Boîtier de motocyclette selon l'une des revendications 2 à 10, **caractérisé en ce que** pour au moins un engrenage (22, 24), des roues cylindriques (46, 48, 52) des groupes de roues dentées (34, 36) sont en prise les unes avec les autres et les axes de rotation (D3, D4) desdits groupes de roues dentées (34, 36) en prise sont disposés de manière parallèle les uns par rapport aux autres.
